(19) **Europäisches Patentamt European Patent Office Office européen des brevets**

(11) **EP 2 169 420 B1**

(12) # FASCICULE DE BREVET EUROPEEN

(45) Date de publication et mention de la délivrance du brevet:
**06.05.2015 Bulletin 2015/19**

(21) Numéro de dépôt: **09171231.5**

(22) Date de dépôt: **24.09.2009**

(51) Int Cl.:
***G01S 5/16*** (2006.01)

(54) **Dispositif de détection optique de position et/ou d'orientation d'objets comprenant au moins un capteur linéaire**

Vorrichtung zur optischen Erfassung der Position und/oder Ausrichtung von Objekten, die mindestens einen linearen Sensor umfasst

Device for optical detection of the position and/or orientation of objects comprising at least one linear sensor

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **26.09.2008 FR 0805315**

(43) Date de publication de la demande:
**31.03.2010 Bulletin 2010/13**

(73) Titulaire: **Thales**
**92200 Neuilly Sur Seine (FR)**

(72) Inventeurs:
 • **Rouzes, Siegfried**
  **33185 Le Haillan (FR)**
 • **Lacoste, Lilian**
  **33700 Merig (FR)**

(74) Mandataire: **Esselin, Sophie et al**
**Marks & Clerk France**
**Conseils en Propriété Industrielle**
**Immeuble Visium**
**22, Avenue Aristide Briand**
**94117 Arcueil Cedex (FR)**

(56) Documents cités:
**FR-A- 2 905 455    FR-A- 2 905 456**
**FR-A- 2 920 546    US-A- 5 617 335**
**US-A- 5 974 365**

• **WANG ET AL: "EM enhancement of 3D head pose estimated by point at infinity" IMAGE AND VISION COMPUTING, GUILDFORD, GB, vol. 25, no. 12, 1 septembre 2007 (2007-09-01), pages 1864-1874, XP022227807 ISSN: 0262-8856**

**Description**

La présente invention concerne le domaine des dispositifs de détection optique de position et d'orientation d'objets dans l'espace. Elle s'applique plus particulièrement dans le domaine aéronautique où dans ce cas l'objet détecté est un casque de pilote.

La détermination du positionnement d'un point dans l'espace et la détermination de l'attitude d'un objet quelconque sont des problèmes concernant de nombreux domaines techniques.

Les différentes solutions généralement apportées doivent lever toute ambiguïté de position ou d'attitude, répondre à une dynamique plus ou moins sévère en débattement, vitesses et accélérations des systèmes et satisfaire une précision élevée, en particulier dans le domaine aéronautique.

Dans les systèmes de détection de position et d'attitude d'objets dans l'espace répondant à une précision de quelques millimètres en position et au degré en attitude, de nombreuses applications existent dans différents domaines.

Ces systèmes sont utilisés en aéronautique, pour la détection de posture de tête, notamment pour les casques d'avions d'arme, d'hélicoptères militaires, civils ou para-civils. Dans ce dernier cas d'application para-civiles, il peut s'agir de missions de sauvetage en mer par exemple. Ils sont utilisés également pour la détection de casques de simulation, cette détection peut alors être combinée à un dispositif d'oculométrie, également appelé eyetracker, pour la détection de position du regard. Dans le domaine de la réalité virtuelle et des jeux, il existe également de nombreuses applications de ces systèmes.

Plus généralement, dans le domaine de la détection de posture générique, il existe également de nombreuses applications, notamment dans le domaine médical pour les opérations à distance et le contrôle d'instruments, dans le domaine du contrôle de position pour des machines outils asservies ou de la commande à distance et enfin pour le cinéma, afin de reproduire les mouvements en images de synthèse.

Ces différentes applications ont des solutions techniques répondant à des exigences plus ou moins contraignantes.

Concernant des applications à faibles contraintes, notamment en terme de précisions, il existe différents systèmes de détection de position et/ ou d'orientation d'objets.

Par exemple, les dispositifs à reconnaissance de patchs ou de formes par caméras utilisent des dessins imprimés sur un objet. Plusieurs caméras observent la scène et déterminent la configuration spatiale du dessin observé.

Il existe également des dispositifs à reconnaissance de sphères par caméras, qui sont utilisés, par exemple au cinéma, pour la reconstitution du mouvement humain. Le dispositif utilise plusieurs caméras qui observent des sphères réfléchissantes et déterminent leur trajectoire.

Enfin il existe des dispositifs de positionnement à ultrasons reposant sur le principe de triangulation entre émetteurs et récepteurs ultrasoniques.

Concernant des applications plus performantes, en particulier dans le domaine aéronautique, les dispositifs de détection de posture de casques dans les aéronefs utilisent deux principales techniques qui sont la détection de posture électromagnétique et la détection de posture électro-optique.

La détection de posture électromagnétique nécessite des dispositifs comprenant des moyens d'émission d'un champ électromagnétique et des capteurs de réception sur le casque permettant de déterminer leur position par rapport à l'émetteur.

La détection de posture électro-optique nécessite généralement des motifs de diodes électroluminescentes, encore appelé LEDs, disposés sur le casque et plusieurs capteurs de type caméras montés dans le cockpit permettant de déterminer la configuration spatiale d'un motif de LEDs.

Pour améliorer les performances, il est fréquent de combiner d'autres dispositifs comprenant des capteurs de types gyroscopiques, accéléro-métriques ou magnéto-métriques. Cette hybridation de capteurs permet d'améliorer les performances dynamiques ou de lever une ambiguïté d'orientation. Ces capteurs ne modifient pas les performances statiques de positionnement des dispositifs de détection cités précédemment.

Néanmoins, ces solutions présentent un certain nombre d'inconvénients et de limitations, particulièrement dans le domaine aéronautique.

Par ailleurs, ces mêmes dispositifs nécessitent plusieurs caméras et plusieurs capteurs. Les calculs de position demandent de nombreuses ressources et l'analyse temps réel est complexe à mettre en oeuvre.

De plus, un inconvénient résulte de la diffusion dans la zone de détection de la lumière des LEDs et un autre inconvénient résulte des perturbations de l'environnement lumineux du cockpit dues au soleil ou à des réflexions parasites sur la verrière.

En ce qui concerne les dispositifs de détection de posture électromagnétique, des solutions robustes sont difficiles à mettre en oeuvre.

En particulier, dans le domaine aéronautique, les rayonnements parasites et les perturbations électromagnétiques peuvent dégrader les performances des systèmes existants.

Une solution mettant en oeuvre un dispositif de type électro-optique tel que décrit dans le brevet FR 2 905 455 permet de s'affranchir des inconvénients des dispositifs électromagnétiques.

D'autre part, cette solution utilise préférentiellement des moyens de projection d'images du type vidéo-projecteur.

En particulier, les vidéo-projecteurs lasers monochromatiques ont les avantages d'émettre dans une bande de fréquences très étroite, une image nette dans un large champ et de permettre de concentrer une forte énergie dans une zone très faible. On peut très facilement discriminer les signaux issus du vidéo-projecteur de la lumière parasite.

Plus précisément, cette solution, comprend des capteurs électro-optiques disposés sur l'objet et répartis en groupe, appelé cluster, des moyens d'analyse et de calcul permettant de retrouver la position et/ou l'attitude de l'objet, des moyens électroniques de génération d'images et des moyens de projection optiques comprenant un afficheur et une optique de projection.

Les moyens de projection optiques émettent dans un cône de projection une image nette en tout point de la zone de débattement dans laquelle peut se déplacer l'objet. L'analyse des portions d'images reçues par les capteurs d'au moins un cluster permet de repérer la position et/ou l'attitude de l'objet dans le repère défini par les moyens de projection, celui-ci étant constitué d'un plan perpendiculaire à l'axe de projection, dit plan-image, et de l'axe de projection.

Enfin, cette solution couplée à celle décrite dans le brevet FR 0706132 permet de définir des clusters dont les propriétés géométriques sont notamment des capteurs linéaires disposés en parallélogramme, donc coplanaires, sur l'objet dont la détermination du mouvement est recherchée.

Un inconvénient d'un tel capteur est la contrainte de précision de report mécanique des capteurs sur leur support. En effet, on cherche typiquement à obtenir des précisions de l'ordre du milliradian en orientation sur des capteurs linéaires d'une longueur de l'ordre de 3 cm. Ceci impose une précision de report de l'ordre $30\mu$m qui doit être maintenue dans toutes les conditions de température entre autres. Si le capteur est dans un plan et possède une forme parallélépipédique, il doit être potentiellement reporté sur céramique et impose un processus de fabrication très spécifique.

De plus, cette disposition contribue à empiler les erreurs de tolérancement mécanique, par exemple sur le positionnement du capteur sur le casque et quant à la précision du capteur. Cette dernière solution nécessite une calibration précise du capteur, qui peut impliquer la mémorisation de coefficients de correction au niveau capteur pour pouvoir atteindre le niveau de précision désiré.

L'invention propose de résoudre ce problème notamment en relâchant la contrainte de planéité des capteurs disposés sur l'objet mobile.

En particulier, l'invention présente l'intérêt de permettre, à partir :

■ d'un seul capteur linéaire solidairement lié à l'objet mobile ;
■ de la projection de mires comprenant au moins deux réseaux sécants d'au moins trois segments parallèles ;
■ du calcul de la position du point de fuite, dans le plan image, de la droite comprenant le capteur ;

de connaître la direction du capteur linéaire dans l'espace.

Le système selon l'invention présente une grande flexibilité quant à la disposition d'un capteur linéaire sur un objet, de faibles contraintes mécaniques et d'un gain remarquable de calculs quant à la détermination de la direction du capteur.

De surcroît, avec les conditions précédentes, l'invention permet à partir de la connaissance de la position de deux points du capteur dans le référentiel du capteur, de connaître leur projection dans le plan image et d'en déduire le sens du capteur linéaire dans l'espace.

Enfin, l'invention permet à partir de la connaissance :

■ du positionnement de deux capteurs sur un objet mobile ;
■ de leur position relative sur l'objet ;
■ de la position de deux points du capteur dans le référentiel de chaque capteur ;

de connaître la posture de l'objet mobile dans l'espace, et donc la rotation et la translation par rapport à une position référence de l'objet dans un repère identifié.

Les différents capteurs linéaires positionnés sur la partie mobile n'ayant aucune relation entre eux, excepté une condition de non colinéarité entre eux et une liaison solidaire avec la partie mobile.

Avantageusement, le système électro-optique de détermination de l'attitude d'une partie mobile comprend des moyens de détermination d'au moins une direction de ladite partie mobile, ledit système comprenant une partie fixe ayant un point de référence (O) et une partie mobile, la partie fixe étant liée solidairement à un plan image.

Avantageusement, la partie mobile est liée solidairement à au-moins un premier dispositif électro-optique linéaire définissant un premier vecteur directeur, la partie fixe projetant dans une première zone comprenant le premier dispositif électro-optique, au moins deux réseaux de faisceaux, dont l'intersection avec un plan perpendiculaire à l'axe moyen de projection défini au moins deux réseaux de droites non parallèles, chacun des réseaux de droites comprenant au moins trois segments parallèles, les faisceaux interceptant le dispositif électro-optiques en au-moins deux couples de triplets de points, le système comprenant des moyens de calculs d'un premier calcul comprenant la détermination de la position d'un premier point (E) dans le plan image à partir des positions des six projections dans le plan image des deux couples de triplets de points, le premier point (E) correspondant au point de fuite de la droite comprenant le premier vecteur directeur, la droite comprenant le point de référence (O) et le premier point (E) déterminant une première direction, ladite direction représentant la direction de la droite comprenant le premier dispositif électro-optique linéaire.

Avantageusement, dans un premier mode de réalisation, la projection comprend une mire comprenant d'une part un premier réseau de faisceaux de trois premiers segments lumineux parallèles entre eux, interceptant le capteur en trois points $(A_1, B_1, C_1)$ et d'autre part un second réseau de faisceaux de trois segments lumineux parallèles entre eux, interceptant le capteur en trois autres points $(A_2, B_2, C_2)$, les deux réseaux de faisceaux faisant un angle entre eux de telle manière que la forme des deux réseaux de faisceaux représente une ligne brisée formant au moins trois dents de scie.

Avantageusement, dans un second mode de réalisation, le système projette successivement deux de mires comprenant respectivement un premier et un second réseau de faisceaux ayant les mêmes caractéristiques dont l'orientation du second réseau de faisceaux par rapport au premier réseau de faisceaux forme un angle déterminé, les réseaux de faisceaux ayant une largeur (D) suffisante pour couvrir la zone de débattement du capteur et comprenant un nombre déterminé de segments parallèles, dont les birapports de quatre segments consécutifs sont tous différents.

Avantageusement, le dispositif électro-optique linéaire étant orienté par un premier couple de points $(A_0, B_0)$ situés sur le dispositif électro-optique, un second calcul des positions des projetés (A, B) du premier couple de points $(A_0, B_0)$ sur le plan image, déterminent le sens dudit dispositif électro-optique dans l'espace par comparaison de l'ordre d'alignement du premier couple de points projetés (A, B) et du premier point (E) dans le plan image.

Avantageusement, un second dispositif électro-optique est lié solidairement à la partie mobile, ledit second dispositif définissant un second vecteur directeur, non colinéaire au premier vecteur directeur, la position du second dispositif par rapport au premier dispositif étant connue dans un référentiel lié à la partie mobile, un troisième calcul de la position d'un second point (F) issu de la projection dans le plan image du point de fuite de la droite comprenant le second vecteur directeur, la droite comprenant le point de référence (O) et le second point (F) déterminant une seconde direction, ladite seconde direction représentant la direction de la droite comprenant le second dispositif électro-optique linéaire.

Avantageusement, le second dispositif électro-optique linéaire étant orienté par un second couple de points $(K_0, L_0)$ situés sur le second dispositif électro-optique linéaire, un quatrième calcul des positions des projetés (K, L) sur le plan image du second couple de points situés sur le second dispositif électro-optique linéaire $(A_0, B_0)$ déterminent le sens dudit second dispositif électro-optique linéaire dans l'espace par comparaison de l'ordre d'alignement du second couple de points projetés (K, L) et du second point (F) dans le plan image.

Avantageusement, le premier calcul et/ou le troisième calcul comprend la détermination :

- ■ d'un point M(X, Y) appartenant à la droite comprenant un dispositif électro-optique linéaire ;
- ■ d'un premier quadruplet de points définis par le projeté du point M et d'un premier triplet de points ;
- ■ d'un second quadruplet de points définis le projeté du point M et d'un second triplet de points ;
- ■ des positions relatives des points des deux triplets de points sur un dispositif électro-optique ;
- ■ de la position du projeté dans le plan image du point M à partir de la loi de conservation d'un birapport d'un quadruplet de points lors d'une projection centrale ;
- ■ de la position d'un point de fuite (E, F), correspondant au projeté du point M lorsque celui-ci est considéré positivement à l'infini sur la droite comprenant un dispositif électro-optique.

Avantageusement, la partie mobile subit un mouvement se décomposant en une rotation et une translation dans l'espace repérées par rapport à une position de référence.

Avantageusement, la rotation de la partie mobile dans l'espace est déterminée par un cinquième calcul comprenant :

- une première étape de détermination :

  o d'un premier vecteur directeur normé $\vec{e}_0$ colinéaire au vecteur formé par le premier couple de points $(A_0, B_0)$, correspondant à une position de référence connue du premier dispositif électro-optique ;
  o d'un second vecteur directeur normé $\vec{f}_0$ colinéaire au vecteur formé par le second couple de points $(K_0, L_0)$ correspondant à une position de référence connue du second dispositif électro-optique ;
  o d'un troisième vecteur normé $\vec{u}_0$, produit vectoriel du premier et second vecteur ;

- une seconde étape de calcul :

  o des positions des points de fuite E et F respectivement des droites comprenant le vecteur image $(\overrightarrow{A'B'})$ par la rotation r du premier vecteur directeur $(\overrightarrow{A_0B_0})$ et le vecteur image $(\overrightarrow{K'L'})$ par la rotation r du second vecteur $(\overrightarrow{K_0L_0})$ ;

  o des vecteurs $\overrightarrow{OE}$ et $\overrightarrow{OF}$ ;

  o d'un quatrième et cinquième vecteurs normés $\vec{e}$ et $\vec{f}$ colinéaires respectivement à $\overrightarrow{OE}$ et $\overrightarrow{OF}$ ;

  o d'un sixième vecteur normé $\vec{u}$, produit vectoriel du quatrième et cinquième vecteurs ;

- une troisième étape de détermination de la rotation r par le produit d'une première matrice formée des premier, second et troisième vecteurs et de l'inverse d'une seconde matrice formée les quatrième, cinquième et sixième vecteurs, l'expression analytique de la rotation étant : $r = [\vec{e};\vec{f};\vec{u}]\cdot[\vec{e_0};\vec{f_0};\vec{u_0}]^{-1}$.

Avantageusement, la translation t est déterminée par la relation : $\vec{t} = k\overrightarrow{OA} - r(\overrightarrow{OA_0})$, où O est le point de référence de la partie fixe, A le projeté dans le plan image d'un point connu du premier dispositif électro-optique, noté $A_0$, et $k$ s'exprime de la manière suivante : ou E est l'image du point de fuite dans le plan image et $B_0$ et un second point connu du second dispositif électro-optique linéaire, $\mu$ est un réel connu s'exprimant de la manière suivante : $\overrightarrow{AE} = \mu\overrightarrow{AB}$.

Avantageusement, la comparaison de deux directions d'un capteur calculées successivement détermine une composante du mouvement de l'objet mobile dans l'espace.

Avantageusement, le dispositif électro-optique est un capteur linéaire, la partie fixe est un projecteur d'images vidéo et l'objet mobile est un casque de pilote.

Avantageusement, un casque de pilote comporte au moins deux dispositifs électro-optiques linéaires non colinéaires.

D'autres caractéristiques et avantages de l'invention apparaîtront à l'aide de la description qui suit, faite en regard des dessins annexés qui représentent :

- la figure 1 : un premier exemple de mires projetées sur un capteur formant un réseau de droites parallèles ;
- la figure 2 : un second exemple de mires projetées sur un capteur linéaire formant des dents ;
- la figure 3 : un capteur linéaire de type CCD ;
- la figure 4 : deux capteurs linéaires de type CCD ;
- la figure 5 : un principe de construction de la projection du point de fuite de la droite comprenant un capteur ;
- la figure 6 : un objet mobile dans l'espace ayant subi une rotation et une translation.

Un principe de l'invention concerne la détermination de la posture d'une partie mobile dans l'espace à partir d'une partie fixe comprenant un projecteur d'images. La partie mobile comprend des capteurs et les images sont projetées dans une zone comprenant les capteurs.

L'efficacité d'un tel système de détection de mouvement d'une partie mobile repose sur la forme, le nombre et la disposition des capteurs sur la partie mobile, par ailleurs elle repose sur la netteté des images projetées, de la forme et de la luminosité des mires projetées.

D'autres caractéristiques peuvent être prises en compte dans un tel système notamment au regard des descriptions des deux demandes de brevets publiées suivantes :

■ La demande de brevet FR 2 905 456, détaillant le principe selon lequel un projecteur d'images permet de connaître le mouvement d'un objet comportant un certain nombre de capteurs formant des clusters.

■ La demande de brevet FR 2 905 455, détaillant un procédé de détection de l'orientation et de la position d'un objet dans l'espace, tel qu'un casque de pilote, dont la disposition des capteurs sur l'objet peut former des parallélogrammes.

Un dernier principe pré-requis à la compréhension de la présente invention repose sur un procédé de détection des extrémités d'un capteur linéaire dans l'espace par projections de mires. Ce principe est énoncé dans la demande de brevet FR 0 706 132.

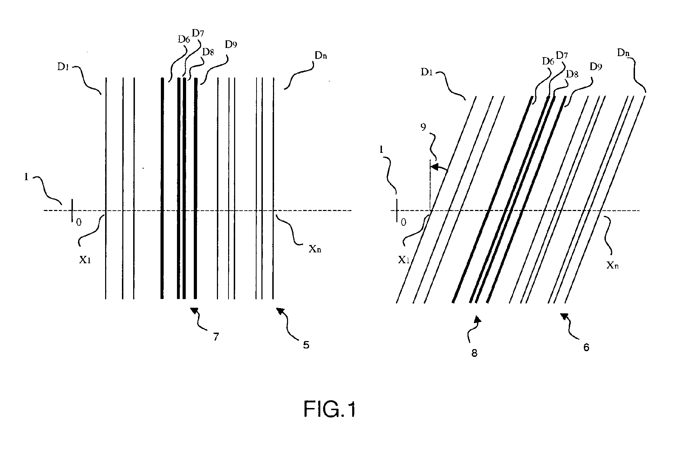

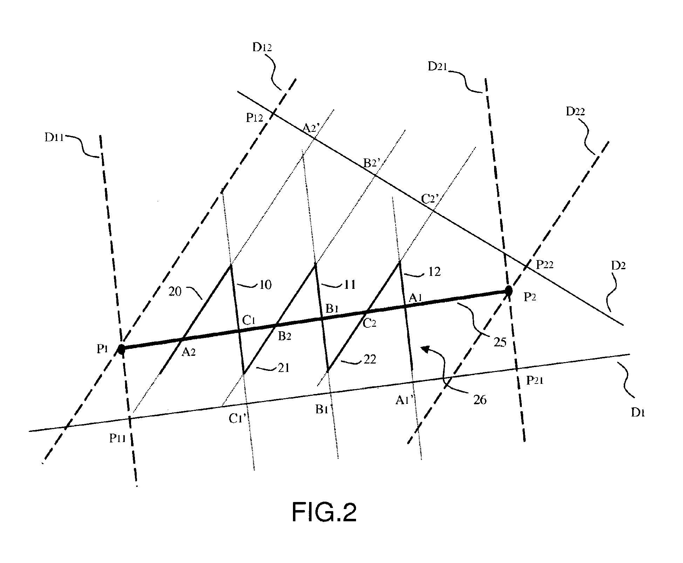

Ce dernier principe est détaillé à nouveau dans la présente description dans les figures 1 et 2. Ce principe est utilisé dans la présente invention, non plus pour calculer des extrémités d'un capteur linéaire, mais pour calculer n'importe quel point de la droite comprenant le capteur linéaire.

Néanmoins, une partie des raisonnements géométriques s'effectuent dans le plan image par la considération de la position de points projetés et par la conservation des bi-rapports issus des motifs des mires projetées sur les capteurs. Une propriété des motifs des mires projetées est notamment de comporter deux réseaux sécants d'au moins trois segments parallèles.

Aussi ce qui suit est organisé de la manière suivante :

■ Dans un premier temps, la présente description comprend un rappel du procédé géométrique de la détermination d'un point, sur le plan image d'un projecteur, issue de la projection d'un point d'un capteur illuminé par une mire dont les motifs sont connus. Ce dernier rappel précise notamment, à partir de la conservation des bi-rapports dans une projection cylindrique, comment les positions des extrémités d'un capteur peuvent être calculées.

■ Dans un second temps, le système de l'invention est décrit ainsi que l'expression analytique du procédé précédemment décrit pour le calcul de la positon d'un point de fuite dans le plan image d'une droite de l'espace comprenant un capteur linéaire.

Procédé de la détermination des extrémités d'un capteur.

Ce principe permet, à partir de moyens de projection, projetant une image nette dans une zone déterminée comprenant au moins un capteur linéaire, de connaître les extrémités du capteur fixé sur un objet, les extrémités étant repérées dans le plan image.

La connaissance des extrémités de la projection de deux capteurs linéaires nous permet de connaître la posture d'un objet lié solidairement aux deux capteurs, à la condition que les deux capteurs ne soient pas colinéaires.

Ce principe comprend différentes étapes de construction du lieu des extrémités d'un capteur linéaire dans le plan image de l'image projetée, le capteur étant situé dans un plan de l'espace.

Le principe consiste à projeter une mire dans une zone de l'espace comprenant le capteur. L'image doit nécessairement être nette dans cette zone de l'espace. Une telle contrainte peut être résolue en utilisant par exemple un vidéo projecteur holographique tel que développé par « Light Blue Optics ».

La première étape du procédé, rappelé dans la présente description, comprend deux modes qui se différencient, d'une part, par la connaissance à priori de l'envergure de la zone dans laquelle se situe le capteur et d'autre part par le type de mires projetées en fonction de cette zone. Un premier mode correspond à une situation d'initialisation du procédé, la position du capteur n'étant pas connue dans l'espace, le champ de projection est donc large. Un second mode correspond à une situation d'asservissement du système, la position du capteur étant connue par une détection antérieure, les moyens de projection émettent une image selon une direction connue dans un champ plus étroit, dont la taille est de l'ordre de grandeur de la taille du capteur, le capteur se situant dans le champ. Ce dernier mode est appelé dans la suite le mode de « tracking » car la mire suit le capteur.

A l'initialisation du procédé, la non-connaissance de la position du capteur dans l'espace nécessite de considérer, par exemple, une famille de mires particulières couvrant la zone de débattement possible du capteur. Dans l'exemple d'une détection de casque dans un cockpit, le casque comprenant des capteurs linéaires, la zone de plus grande envergure couvre une large partie du cockpit.

Le second mode correspond à une détection alors qu'une position précédente du capteur est connue. Ce mode permet de définir une image plus petite que celle projetée dans le premier mode. Ce second mode utilise une autre famille de mires.

Dans les deux modes le procédé de détection, compte tenu des deux familles de mires, est identique. Le mode d'initialisation propose néanmoins un procédé de détection de la zone dans laquelle se situe le capteur comprenant une étape supplémentaire.

Le second mode permet un gain de précision dans les calculs notamment de la position de l'image du capteur dans le plan image. En outre, ce second mode permet d'émettre des mires dont la densité de lumière est plus importante dans les motifs émis que dans le premier mode, de ce fait la détection est plus efficace.

Ce second mode fonctionne généralement dans un mode asservi qui est initialisé par le premier mode.

Nous nommerons les mires utilisées dans le premier mode : des « mires générales », et les mires du second mode : des « mires de tracking ». Les deux familles de mires étant appelées dans la suite de la description des mires « GHOST ».

Les mires sont définies dans le plan image de l'image projetée. Généralement ce plan n'est pas parallèle au plan comprenant un capteur.

Un principe du procédé repose sur le fait que les informations lues sur le capteur, correspondants aux traces de la mire, permettent de calculer un invariant de projection. Cette problématique est commune aux mires générales et aux mires de tracking.

Dans les deux modes, le principe de la détection des extrémités d'un capteur permet à partir de la connaissance de trois droites parallèles du réseau dans le plan image et de leur trace sur le capteur, de tracer dans le plan image deux droites passant par chacune des extrémités du capteur et parallèles au réseau considéré.

Il est donc nécessaire de considérer deux réseaux de trois droites, ne possédant pas les mêmes orientations dans le plan image, pour tracer deux couples de deux droites sécantes, les intersections définissant les extrémités de l'image du capteur dans le plan image. Dans ce cas, le procédé permet de déduire les extrémités de l'image du capteur par construction des intersections des droites passant par lesdites extrémités. Cette construction est rendue possible car la projection d'une intersection de droites est l'intersection des projections des droites.

L'objectif des mires générales se distingue des mires de tracking par le fait que l'on ne connaît pas a priori le triplet de droites dont on lit la trace sur capteur, il faut donc pouvoir l'identifier. Dans ce contexte, le procédé permet de considérer un réseau de droites parallèles tel que tout quadruplet de droites successives du réseau définit un birapport unique. L'unicité du birapport d'un quadruplet définit un quadruplet unique et rend donc un triplet de droites interceptant le capteur identifiable. En pratique, cela peut s'avérer difficile à réaliser pour différentes raisons. Ainsi, le procédé s'applique également à un ensemble de plus de quatre droites. On peut envisager d'identifier de façon unique non pas un quadruplet, mais un quintuplet ou tout ensemble de N droites (N supérieur à 4). Pour un ensemble de N droites, le procédé s'applique à un espace plus étendu et permet de séparer au mieux les points et donc les groupes de droites.

On rappelle ci-dessous la définition d'un birapport de quatre points alignés.

Le birapport $B_R$ de quatre points A, B, C, D alignés est défini par la relation suivante :

$$B_R(A, B, C, D) = \frac{\overline{AC}}{\overline{BC}} \cdot \frac{\overline{BD}}{\overline{AD}} \; ;$$

exprimé en valeur algébrique par la relation suivante :

$$B_R(x1, x2, x3, x4) = \frac{x3 - x1}{x3 - x2} \cdot \frac{x4 - x2}{x4 - x1} ,$$

où x1, x2, x3 et x4 sont les abscisses des points A, B, C, D, celles-ci étant définies sur une droite contenant les points et ayant pour origine un point référence de la droite.

Ce principe de localisation par mires est appliqué à plusieurs capteurs ayant chacun une orientation différente.

Ainsi, pour un capteur donné, il est nécessaire de disposer de deux mires générales, de directions différentes et envoyées successivement, afin de trouver les deux extrémités d'un capteur dans le plan image.

Ainsi, constitue une mire générale tout réseau de droites parallèles au plan image tel que :

- le réseau est à la fois suffisamment étendu et suffisamment serré, pour assurer qu'il intercepte le capteur en au moins quatre points ;
- le réseau est partout suffisamment détendu pour que l'on puisse distinguer sans confusion possible sur le capteur les tâches correspondant respectivement à 2 droites adjacentes quelconques du réseau ;
- l'application qui envoie tout quadruplet de droites ou plus successives du réseau sur son birapport propre est une bijection, et cette bijection est suffisamment dispersive pour assurer que l'on peut toujours retrouver le quadruplet antécédent sans confusion possible.

La figure 1 représente un exemple deux de réseaux 5 et 6 envoyés successivement de deux mires générales, faisant un angle 9 entre eux. Les deux quadruplets 7 et 8 sont constitués des droites D6, D7, D8 D9 et possèdent un birapport unique. La détection des quatre points d'intersection de chaque réseau sur le capteur permet d'identifier une zone de plus faible envergure afin de projeter des mires de tracking telles que décrit dans la suite sur la figure 2. Par ailleurs, le procédé permet selon le procédé décrit par la suite à partir des mires de tracking de construire les extrémités de l'image du capteur dans le plan image. Il suffit de d'appliquer le procédé aux deux réseaux envoyés successivement et de considérer trois droites de chaque quadruplet de chaque réseau interceptant le capteur.

La durée entre deux projections de deux mires générales est nécessairement limitée de manière à ce que le capteur n'effectue pas un mouvement trop important dans l'espace lors de son déplacement.

Le procédé permet dans les deux modes de construire les extrémités de l'image du capteur dans le plan image à partir de deux réseaux projetés simultanément (cas des mires de tracking) ou successivement (cas des mires générales), les réseaux comprenant au moins trois droites (ou segments) parallèles dans le cas des mires de tracking et au moins quatre droites dans le cas des mires générales.

Le procédé permet d'envoyer deux réseaux de trois droites, les réseaux n'étant pas parallèles, afin de retrouver les extrémités du capteur linéaire dans le plan image.

Dans le premier mode, les deux réseaux de droites, chacun constituant une mire générale, sont projetés successivement dans la zone comprenant le capteur. En revanche, dans le second mode, les deux réseaux de droites (ou segments) sont projetés dans une unique mire de tracking, c'est à dire en une seule image.

La figure 2 illustre une mire de tracking 26 dans le plan image de projection. Elle comprend un premier réseau de trois segments 10, 11 et 12 lumineux parallèles entre eux et second réseau de trois segments 20, 21 et 22. Les deux réseaux projetés dans la même image simultanément ne sont pas parallèles et sont joints par les extrémités des segments. Dans l'exemple de la figure 2, ils sont joints par les extrémités supérieures de chaque segment formant une figure en dents de scie.

Dans la pratique, l'image constituée des segments lumineux se déforme dans la droite ou le plan comprenant le capteur, par une projection conique, lorsqu'elle intercepte le capteur linéaire, le plan du capteur et le plan de l'image projetée n'étant pas à priori parallèle. Le capteur détecte donc les points lumineux qui correspondent aux points d'intersection de l'image projetée avec le capteur. Le procédé considère l'image du capteur dans le plan de l'image projetée, l'image du capteur se déformant alors par la projection conique considérée ci-dessus, dans le plan image.

La figure 2 représente l'image 25 du capteur dans le plan image. Les birapports des distances entre les points d'intersection du capteur et des droites du réseau se conservent par la projection conique. L'image 25 du capteur comprend deux extrémités P1 et P2 dans le plan image qui ne sont pas connus à priori. La construction de leur position dans le plan image constituant le coeur du procédé. Par ailleurs, dans le plan image le premier réseau intercepte l'image 25 du capteur en trois points A1, B1 et C1, ces trois derniers points étant les projetés dans le plan image des points d'intersection du premier réseau avec le capteur. Le second réseau intercepte l'image 25 du capteur en trois autres points A2, B2 et C2, ces trois derniers points étant les projetés dans le plan image des points d'intersection du second réseau avec le capteur.

Le procédé décrit par la suite est valable également pour les mires générales et constitue la deuxième étape du procédé.

Si l'on considère le capteur dans l'espace, l'une des extrémités du capteur peut-être considérée comme l'origine d'un repère comprenant l'axe des abscisses porté par l'axe du capteur, on note alors 0, $x_{A2}$, $x_{C1}$, $x_{B2}$, $x_{B1}$, $x_{C2}$, $x_{A1}$, $x_{max}$ les abscisses respectives des points d'intersection du premier et du second réseau avec le capteur ainsi que l'autre extrémité du capteur, leurs projetés dans le plan image étant respectivement les points P1, A2, C1, B2, B1, C2, A1 et P2 dans le plan du capteur.

Le procédé permet de considérer les birapports $k_{11}$, $k_{12}$, $k_{21}$, $k_{22}$ de quadruplets de points définis sur l'axe des abscisses de l'axe du capteur par les relations suivantes, $B_R$ étant le birapport de quatre points définis précédemment :

$$k_{11} = B_R(x_{A1}, x_{B1}, x_{C1}, 0) \; ;$$

$$k_{12} = B_R(x_{C1}, x_{B1}, x_{A1}, x_{max}) \; ;$$

$$k_{21} = B_R(x_{C2}, x_{B2}, x_{A2}, 0) \; ;$$

$$k_{22} = B_R(x_{A2}, x_{B2}, x_{C2}, x_{max}) \; ;$$

Enfin la troisième étape du procédé permet de construire les extrémités de l'image du capteur dans le plan image. Le but étant de trouver les extrémités du capteur dans le plan image, par construction selon la projection conique et conservation des birapports dans le plan du capteur et dans le plan image des quadruplets précédemment considérés, il est ensuite aisé de retrouver la position du capteur dans l'espace.

Pour ce faire, le procédé propose d'utiliser notamment la conservation des birapports de quatre points selon des projections coniques et cylindriques.

Concernant la projection conique relative à la projection de l'image sur le capteur, le procédé permet de considérer les birapports $k_{11}$, $k_{12}$, $k_{21}$, $k_{22}$ conservés par les projections coniques des quadruplets des points définis précédemment sur les droites D1 et D2, par les relations suivantes :

$$k_{11} = B_R(A1, B1, C1, P1) \; ;$$

$$k_{12} = B_R(C1, B1, A1, P2)$$

$$k_{21} = B_R(C2, B2, A2, P1) \; ;$$

$$k_{22} = B_R(A2, B2, C2, P2) \; ;$$

Le procédé propose en premier lieu de construire dans le plan image deux droites perpendiculaires à chaque réseau. La première droite D1 est perpendiculaire au premier réseau, elle est placée arbitrairement dans la partie inférieure de l'image. Les droites 10, 11 et 12 portant les segments lumineux du premier réseau interceptent la droite D1 en trois points A1', B1' et C1'. De la même manière, la seconde droite D2 est perpendiculaire au second réseau, elle est placée arbitrairement dans la partie supérieure de l'image. Les droites 20, 21 et 22 portant les segments lumineux du second réseau interceptent la droite D2 en trois points A2', B2' et C2'.

On cherche à déterminer les extrémités P1 et P2 de l'image du capteur dans le plan image. Chacun de ces points possède deux projetés sur les droites D1 et D2 selon l'axe parallèle respectivement au premier et au second réseaux. Notons P11 le projeté de P1 sur D1 selon l'axe du premier réseau et P12 le projeté de P1 sur D2 selon l'axe du second réseau. De manière analogue, notons P21 le projeté de P2 sur D1 selon l'axe du premier réseau et P22 le projeté de P2 sur D2 selon l'axe du second réseau.

Le procédé permet de considérer les birapports $k_{11}$, $k_{12}$, $k_{21}$, $k_{22}$ conservés par les projections cylindriques des quadruplets des points définis précédemment sur les droites D1 et D2, par les relations suivantes :

$$k_{11} = B_R(A1', B1', C1', P11') \; ;$$

$$k_{12} = B_R(C1', B1', A1', P21) \; ;$$

$$k_{21} = B_R(C2', B2', A2', P12) \; ;$$

$$k_{22} = B_R(A2', B2', C2', P21) \; ;$$

A partir de là on peut en déduire :

- le point P11 connaissant $k_{11}$ et A1', B1', C1' ;
- le point P21 connaissant $k_{21}$ et A1', B1', C1' ;
- le point P12 connaissant $k_{12}$ et A2 ', B2 ', C2 ' ;
- le point P22 connaissant $k_{22}$ et A2', B2',C2' ;

Puis, on peut construire dans le plan image les droites :

- D11 connaissant P11 et la direction de projection de projection selon l'axe du premier réseau ;
- D21 connaissant P21 et la direction de projection de projection selon l'axe du second réseau;
- D12 connaissant P12 et la direction de projection de projection selon l'axe du premier réseau;
- D22 connaissant P22 et la direction de projection de projection selon l'axe du second réseau;

Les deux directions étant connues par construction de la mire.

On obtient selon le procédé les deux extrémités de l'image du capteur dans le plan image par construction :

- P1 = D11 ∩ D12 ;
- P2 = D21 ∩ D22.

Algébriquement, cette dernière opération en deux dimensions possède une solution à partir du moment ou les deux réseaux ne sont pas colinéaires. Par construction ils ne le sont pas pour les mires de tracking lorsqu'ils sont projetés sur une même image et ne le sont pas non plus lors de l'envoi successif de deux mires générales.

La démonstration est identique pour deux réseaux non parallèles envoyés successivement par la projection de mires générales. Le temps entre deux envois étant suffisamment court pour considérer que le capteur n'ait quasiment pas changé de position dans l'espace.

Application du principe à la présente invention.

Le système selon l'invention permet d'utiliser ce dernier principe en considérant non plus les deux extrémités des capteurs mais un point quelconque de la droite comprenant le capteur notamment le point de fuite de cette droite.

Le système selon l'invention s'applique aussi bien à une utilisation des mires générales pour l'initialisation de la détection et à une utilisation des mires de tracking pour le mode d'asservissement de la détection. Il s'applique donc à la famille des mires nommées mires GHOST.

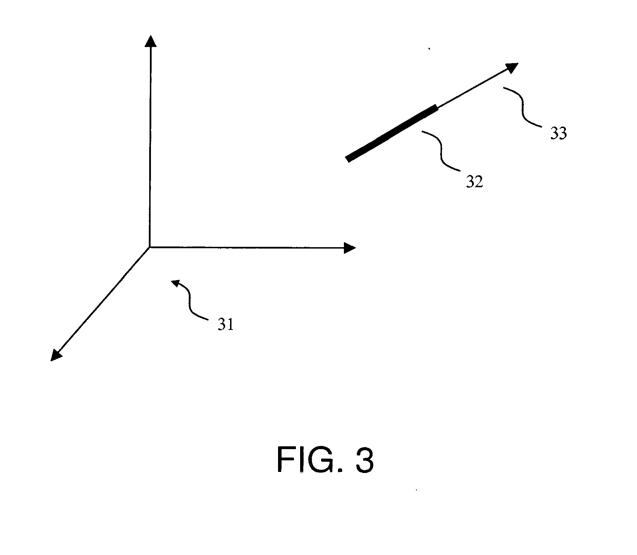

De surcroît, la contrainte d'une disposition des capteurs coplanaires n'est plus nécessaire dans le dispositif décrit dans les figures 3, 4, 5 et 6.

En outre, le système selon l'invention permet à partir d'un seul capteur linéaire positionné sur la partie mobile et d'un projecteur projetant au moins une mire comprenant deux réseaux de faisceaux sécants d'au moins trois droites parallèles :

- de déterminer, dans un premier temps, la direction du capteur dans l'espace, cette direction étant déterminée par la droite comprenant le capteur et ;
- de déterminer, dans un second temps, le sens du capteur dans l'espace, le sens étant donné par l'ordre des abscisses pixels dans lequel le capteur fournit ses mesures.

La connaissance de la variation dans le temps de deux directions ou de deux sens successifs d'un capteur permet alors de connaître l'évolution d'une partie du mouvement de l'objet dans l'espace.

La figure 3 représente un capteur 32 linéaire, qui peut-être par exemple un CCD, le vecteur directeur 33 désigne son orientation dans l'espace. Le capteur 32 est lié solidairement à une partie mobile, non représentée, tel qu'un objet, dont le but est de rechercher la posture à partir d'une partie fixe dans le référentiel 31. Dans un mode privilégié de réalisation la partie fixe est un projecteur d'images, tel qu'un projecteur holographique décrit dans le brevet FR 2 905 455. Il projète alors des mires GHOST, c'est à dire comprenant au moins deux réseaux d'au moins trois droites parallèles dans une zone comprenant un capteur linéaire.

Un principe de l'invention repose sur la détermination de la posture de l'objet à partir de la configuration dans le plan projectif image, celui-ci étant lié à la partie fixe, de la projection de vecteurs directeurs des capteurs liés solidairement à la partie mobile.

L'invention permet à partir d'un capteur linéaire positionné sur la partie mobile de déterminer la direction puis le sens du vecteur directeur lié au capteur linéaire.

A partir d'un second capteur linéaire positionné sur la partie mobile, la détermination de sa direction et de son sens permet de constituer une base formée du vecteur directeur d'un premier capteur, du vecteur directeur d'un second capteur et du produit vectoriel des deux vecteurs. Cette base n'est pas nécessairement orthonormée.

Outre la contrainte de la disposition coplanaire des capteurs qui est relâchée dans la présente invention, un des principaux avantages de l'invention est de s'affranchir du calcul du lieu des extrémités des capteurs comme détaillé précédemment dans l'exemple de l'utilisation des mires GHOST pour le calcul du lieu des extrémités.

Un avantage de l'invention réside dans la considération de la projection dans le plan image du point de fuite de la droite portant un capteur. Le calcul de la position de la projection du point de fuite nécessite le procédé précédemment détaillé aux figures 1 et 2 et utilise la conservation des bi-rapports lors de l'envoi d'une mire GHOST sur un capteur linéaire.

De la position du projeté du point de fuite dans le plan image, l'invention permet d'en déduire la direction du capteur dans l'espace.

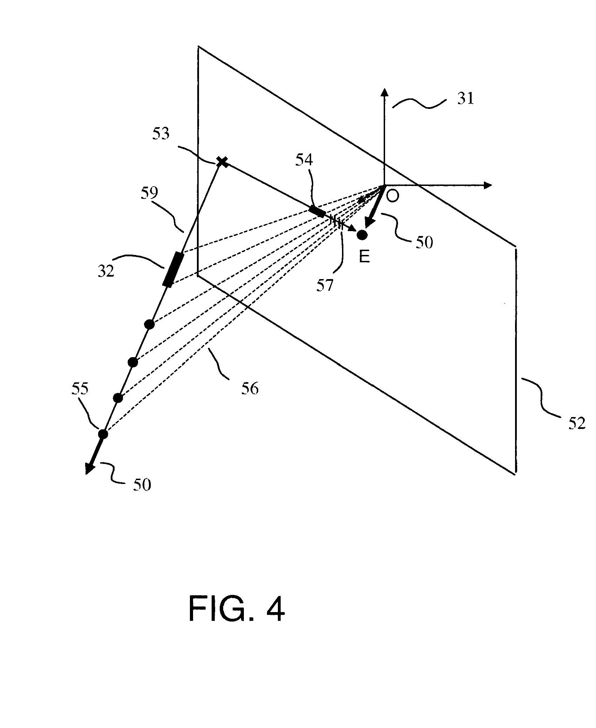

La figure 4 représente un capteur linéaire 32, tel qu'un CCD placé sur une partie mobile qui n'est pas représentée. La droite 59 est la droite portant le capteur linéaire 32, elle intercepte en un point 53 le plan image 52 du projecteur d'images fixe.

La partie fixe comprenant un projecteur d'images est située au point O, centre du référentiel 31 d'où sont projetées les images selon le plan image 52.

Comme décrit précédemment, la projection sur un CCD d'une mire GHOST, c'est à dire une mire comprenant au moins deux réseaux sécants de droites parallèles entre elles, permet de trouver l'image de tout point situé sur la droite portant le CCD, la position d'un point étant définie par son abscisse sur cette droite.

Un avantage de l'invention est de permettre de connaître la direction d'un capteur par un premier calcul de la position de la projection dans le plan image du point de fuite de la droite comprenant le capteur.

Dans la présente invention, pour trouver la projection E dans le plan image du point de fuite, donnant la direction du CCD, il est nécessaire de faire tendre l'abscisse du point sur la droite du capteur vers l'infini. La projection du point de fuite E dans le plan image 52 de la droite 59 comprenant le capteur linéaire 32 est déterminé de manière analytique.

L'algorithme décrit précédemment aux figures 1 et 2 à partir d'une mire projetée permettant de déterminer les extrémités d'un capteur dans le plan image, peut s'appliquer pour trouver la projection du point de fuite E de la droite 59 comprenant le capteur 32.

Pour cela, on se place dans un repère de référence, d'origine O ; le plan image est par exemple le plan d'équation $X = 1$.

Par principe, une mire GHOST (d'initialisation ou de tracking) comprend au moins deux réseaux de trois droites parallèles. Les équations des droites de la figure 2, connues dans le plan image, peuvent prendre la forme suivante :

$$x \sin \Theta 1 - y \cos \Theta 1 = c_{11} ;$$

$$x \sin \Theta 1 - y \cos \Theta 1 = c_{12} ;$$

$$x \sin \Theta 1 - y \cos \Theta 1 = c_{13} ;$$

où $\Theta 1$ est l'angle que forme la direction du premier réseau avec un vecteur prédéterminé de la base du repère, ledit vecteur étant colinéaire au plan image,

$$x \sin \Theta 2 - y \cos \Theta 2 = c_{21} ;$$

$$x \sin \Theta 2 - y \cos \Theta 2 = c_{22} ;$$

$$x \sin \Theta 2 - y \cos \Theta 2 = c_{23} ;$$

où $\Theta 2$ est l'angle que forme la direction du second réseau avec le vecteur prédéterminé de la base du repère.

Les plans de projection de ces droites coupent le capteur considéré en six points d'abscisses mesurées et identifiées notées pour un capteur donné : $a_{11}$, $a_{21}$, $a_{12}$, $a_{22}$, $a_{13}$, $a_{23}$ représentant respectivement les abscisses précédemment notées : $x_{A2}$, $x_{C1}$, $x_{B2}$, $x_{B1}$, $x_{C2}$, $x_{A1}$.

Pour déterminer l'image d'un point quelconque qui est sur la droite comprenant le capteur, on considère un point M sur la droite 59 portant le capteur 32 et ayant une abscisse $X_M$ connue sur ladite droite.

Limace de M est à l'intersection des droites construites suivantes :

$$x \sin \Theta 1 - y \cos \Theta 1 = c_{1M} ;$$

$$x \sin \Theta 2 - y \cos \Theta 2 = c_{2M} ;$$

En utilisant, les six équations de droites précédentes, les coefficients $c_{1M}$ et $c_{2M}$ peuvent être exprimés de la manière suivante, dans un le cas où $X_M \neq a_{i2}$ :

$$c_{iM} = \frac{t_i \cdot c_{i2} \cdot (c_{i3} - c_{i1}) - c_{i1}(c_{i3} - c_{i2})}{t_i \cdot (c_{i3} - c_{i1}) - (c_{i3} - c_{i2})}, \text{ avec } t_i = \frac{(X_M - a_{i1}) \cdot (a_{i3} - a_{i2})}{(X_M - a_{i2}) \cdot (a_{i3} - a_{i1})} ;$$

Dans un second cas, si $X_M = a_{i2}$, on a alors $c_{iM} = c_{i2}$.

On obtient alors les coordonnées du projeté $m(x_m, y_m)$ de M dans le plan image:

$$\blacksquare \quad x_M = \frac{c_{2M} \cdot \cos \theta_1 - c_{1M} \cdot \cos \theta_2}{\sin(\theta_2 - \theta_1)} ;$$

$$\blacksquare \quad y_M = \frac{c_{2M} \cdot \sin\theta_1 - c_{1M} \cdot \sin\theta_2}{\sin(\theta_2 - \theta_1)} \quad ;$$

Ainsi l'invention permet de calculer les coordonnées de tout point projeté dans le plan image de la droite comprenant un dispositif électro-optique linéaire, à parti du moment où le dispositif électro-optique a été intercepté par une mire GHOST.

En particulier, si l'on considère le point de fuite de la droite comprenant le dispositif électro-optique linéaire, il suffit de considérer un point de la droite à l'infini.

Les coordonnées de la projection E du point fuite sur le plan image sont obtenues en faisant tendre $X_m$ vers l'infini positivement.

On obtient donc les formules précédentes avec $t_i = \dfrac{(a_{i3} - a_{i2})}{(a_{i3} - a_{i1})}$ ;

Les coefficients $c_{1M}$ et $c_{2M}$ deviennent :

$$c_{1M} = \frac{\dfrac{(a_{13} - a_{12})}{(a_{13} - a_{11})} \cdot c_{12} \cdot (c_{13} - c_{11}) - c_{11}(c_{13} - c_{12})}{\dfrac{(a_{13} - a_{12})}{(a_{13} - a_{11})} \cdot (c_{13} - c_{11}) - (c_{13} - c_{12})}$$

$$c_{2M} = \frac{\dfrac{(a_{23} - a_{22})}{(a_{23} - a_{21})} \cdot c_{22} \cdot (c_{23} - c_{21}) - c_{21}(c_{23} - c_{22})}{\dfrac{(a_{23} - a_{22})}{(a_{23} - a_{21})} \cdot (c_{23} - c_{21}) - (c_{23} - c_{22})} \quad ;$$

La direction du capteur est alors donnée par la droite (OE), O étant un point référence de la partie fixe.

A ce stade, l'invention permet de déterminer suite à la projection d'une mire GHOST sur un capteur de calculer la position, sur le plan image, de l'image du point de fuite de la droite comprenant ledit capteur et d'en déduire par conséquent la direction du capteur.

L'invention propose à partir de la détermination de deux points connus d'un dispositif électro-optique linéaire, tel que les extrémités par exemple ou tout autre couple de points du dispositif électro-optique linéaire, de connaître le sens du capteur.

En effet, le sens du capteur se déduit de la détermination de deux des points de la droite projetée sur le plan image de la droite portant le capteur.

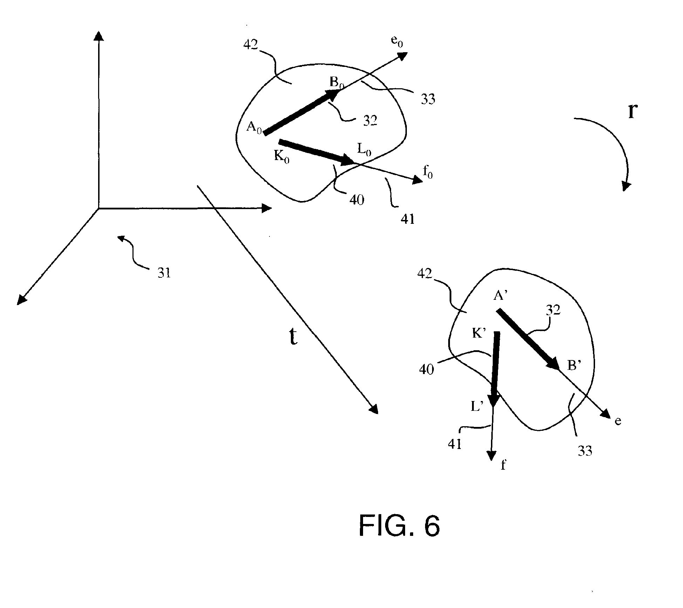

Le sens du capteur est déterminé soit par le vecteur $\overrightarrow{OE}$ ou par le vecteur $-\overrightarrow{OE}$. Par exemple, le rapport algébrique $\dfrac{\overline{AE}}{\overline{AB}}$ détermine la direction orientée du capteur, avec A et B les projetés dans le plan image de deux points $A_0$ et $B_0$ du capteur comme représentés sur la figure 6.

Par ailleurs si $t_i \cdot (a_{i3} - a_{i1}) - (a_{i3} - a_{i2}) = 0$, il s'agit du cas où le capteur est parallèle au plan image. Dans ce dernier cas, la direction orientée du capteur est directement déterminé par le vecteur $\overrightarrow{AB}$.

L'invention permet donc de connaître la direction et le sens d'un capteur placé sur un objet mobile à partir de la simple détermination dans le plan image du point de fuite de la droite comprenant le capteur, le calcul étant réalisé grâce à la projection sur le capteur de mires de type GHOST.

L'invention permet à partir de deux capteurs positionnés sur la partie mobile, dont on connaît leur position relative, à partir de la projection de mires GHOST, de déterminer la posture des deux capteurs et donc de la partie mobile.

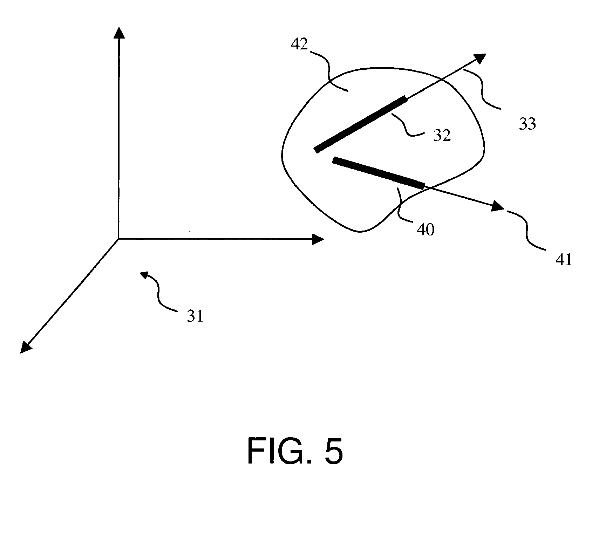

La figure 5 représente une partie mobile 42 dont on cherche la posture dans un référentiel 31. La partie mobile 42 comprend deux capteurs 32, 40 dont les sens sont déterminés respectivement par les vecteurs 33, 41.

L'invention permet de déterminer l'attitude de la partie mobile à partir de la détermination de l'attitude d'au moins deux capteurs non colinéaires liés solidairement à la partie mobile.

**EP 2 169 420 B1**

Ainsi selon le principe de l'invention, la rotation et la translation d'une partie mobile par rapport à une position de référence dans l'espace sont déterminées, à partir de deux capteurs formés, par exemple, d'un CCD linéaire chacun.
Les conditions de détermination de la posture d'un objet dans l'espace comprennent notamment :

- la définition d'une partie fixe comprenant un projecteur d'images et un plan images lié à la partie fixe ;
- La projection de mires comprenant deux réseaux sécants d'au moins trois droites parallèles dans chaque zone comprenant un capteur ;
- les liaisons solidaires des capteurs avec la partie mobile, leurs positions étant connues sur la partie mobile, ces derniers n'étant pas parallèles.

La figure 6 représente une posture de l'objet mobile, la posture de l'objet étant identifiée par une disposition des capteurs dans l'espace, ayant subies une translation et une rotation. La figure 6 représente également une posture de référence de l'objet, une disposition de référence des capteurs dans l'espace étant connue.
Les composantes du mouvement de l'objet mobile dans l'espace, c'est à dire la rotation et la translation subi par l'objet, sont déterminées à partir des projections dans le plan image de la partie fixe de deux capteurs solidairement liés à l'objet.

Si l'on nomme $\overrightarrow{A_0B_0}$ le vecteur portant le premier capteur 32 d'une position de référence connue dans le repère 31 et $\overrightarrow{K_0L_0}$ le vecteur portant le second capteur 40 de la position de référence connue dans le repère 31, alors on peut noter les vecteurs unitaires $\overrightarrow{e_0}$ et $\overrightarrow{f_0}$ respectivement déterminés par les relations :

$$\overrightarrow{e_0} = \frac{\overrightarrow{A_0B_0}}{\overline{A_0B_0}}$$

$$\overrightarrow{f_0} = \frac{\overrightarrow{K_0L_0}}{\overline{K_0L_0}} \ ;$$

on note  $\overrightarrow{u_0} = \overrightarrow{e_0} \wedge \overrightarrow{f_0}$ .

Si on note A', B', K' et L' les images des points $A_0$, $B_0$, $K_0$ et $L_0$ après la rotation et la translation subi par l'objet mobile, en notant t, la translation, et r, la rotation, on obtient les relations suivantes :

$$\overrightarrow{OA'} = \overset{\bullet}{t} + r(\overrightarrow{OA_0}) \ ;$$

$$\overrightarrow{OB'} = \overset{\bullet}{t} + r(\overrightarrow{OB_0}) \ ;$$

$$\overrightarrow{OK'} = \overset{\bullet}{t} + r(\overrightarrow{OK_0}) \ ;$$

$$OL' = t + r(OL_0) \ ;$$

où O est l'origine du repère 31.
Les vecteurs du dispositif électro-optique deviennent :

$$\overrightarrow{A'B'} = r(\overrightarrow{A_0B_0}) \ ;$$

$$K'L' = r(K_0 L_0)$$

Le procédé rappelé dans la description des figures 1 et 2 ainsi que son application pour déterminer les projetés dans le plan image de la partie fixe d'un point de fuite d'une droite dans l'espace, nous permet de trouver des vecteurs $\vec{E}$ et $\vec{F}$, tel que :

○ $\vec{E}$ est non nul et positivement proportionnel à $\overrightarrow{A'B'}$ ;
○ $\vec{F}$ est non nul et positivement proportionnel à $\overrightarrow{K'L'}$,

Il est alors possible de définir les deux vecteurs normés $\vec{e}$ et $\vec{f}$, tel que :

$$\vec{e} = \frac{\vec{E}}{\|\vec{E}\|} \quad ;$$

$$\vec{f} = \frac{\vec{F}}{\|\vec{F}\|} \quad .$$

On obtient donc les relations suivantes :

$$\vec{e} = \frac{\overrightarrow{A'B'}}{A'B'} \quad ;$$

$$\vec{f} = \frac{\overrightarrow{K'L'}}{K'L'} \quad .$$

Notons $\vec{u}$ le vecteur tel que $\vec{u} = \vec{e} \wedge \vec{f}$. Par hypothèse les droites $(A_0 B_0)$ et $(K_0 L_0)$ ne sont pas parallèles, la matrice $[\overrightarrow{e_0} ; \overrightarrow{f_0} ; \overrightarrow{u_0}]$ est inversible et on obtient la formule donnant directement la rotation r :

$$r = [\vec{e} ; \vec{f} ; \vec{u}] \cdot [\overrightarrow{e_0} ; \overrightarrow{f_0} ; \overrightarrow{u_0}]^{-1} \quad ;$$

La matrice $[\overrightarrow{e_0} ; \overrightarrow{f_0} ; \overrightarrow{u_0}]^{-1}$ est une donnée fixe liée au couple de capteurs choisi et à la posture de référence, dont le calcul est issu de mesures, ce calcul étant donc fait une fois pour toutes avec la précision de l'on souhaite.

Déterminons la translation $\vec{t}$ à partir des projetés A' et B' sur le plan image des points A et B appartenant à la droite comprenant le premier capteur linéaire. On note $\mu$ le réel connu tel que $\overrightarrow{AE} = \mu \overrightarrow{AB}$ et k le réel tel que $\overrightarrow{OA'} = k \cdot \overrightarrow{OA}$, on obtient alors les relations suivantes :

$$\mu = \frac{\overrightarrow{AE}}{\overrightarrow{AB}}, \text{ puis } k = |\mu - 1| \frac{A_0 B_0}{OE} \quad ;$$

la translation se déduit alors selon la relation suivante :

$$\vec{t} = k \overrightarrow{OA} - r(\overrightarrow{OA_0})$$

Les avantages de l'invention permettent :

■ de relaxer des contraintes de précision mécanique sur le capteur, et donc :

> o d'utiliser un capteur beaucoup plus générique et donc moins coûteux ;
> o de rapporter le problème de tolérancement mécanique à une question d'installation sur le casque ;
> o d'éviter certaines contraintes de restrictions d'exportation liées à la spécificité du capteur ;
> o de simplifier la gestion de la pérennité du composant capteur ;
> o de supprimer l'étape de caractérisation et de calibrage du capteur en usine.

Par ailleurs, le passage d'un capteur étendu, du type de forme carré, à un capteur linéaire permet :

> o de relâcher les contraintes d'installation sur casque, en effet il devient plus simple de placer sur la surface du casque un capteur linéaire qu'un capteur carré ;
> o de limiter le nombre de capteurs montés sur le casque, ce qui permet de limiter la masse et le traitement du signal associé ;
> o d'envisager de monter des capteurs plus gros et donc d'améliorer la précision de mesure du système, en effet la taille du capteur est un élément important de la précision du système ; dans le cas d'un capteur linéaire, il est possible de doubler la taille du capteur sur un casque ;
> o d'avoir un capteur qui a très peu de sensibilité à la dilatation et donc à la température ambiante. Le capteur étant linéaire, sa dilatation ne transforme pas son vecteur directeur associé et à donc un impact nul sur la mesure d'attitude réalisée, en revanche elle peut avoir un impact sur la mesure de position.

Enfin, la puissance de calcul nécessaire est réduite par rapport à une approche par capteurs à CCD parallèles puisque la présente invention permet d'accéder directement au point de fuite lié au vecteur directeur au lieu d'avoir à le déterminer par intersection de points virtuels. Le bénéfice lié à cette évolution de calcul ne concerne pas tant le gain en ressources de processing mais le fait que l'utilisation d'un seul estimateur permet de minimiser la propagation et les occasions d'amplification des erreurs de mesures.

Par ailleurs, si plusieurs capteurs sont en visibilité simultanément, une augmentation de la précision de la mesure par une moyenne des postures peut être effectuée, par exemple telle qu'une rotation moyenne et une translation moyenne.

Il est, également, possible de faire une moyenne des vecteurs LOS mesurés, dont la signification anglo-saxonne signifie « Line Of Sight ».

En effet, N capteurs linéaires en visibilité définissent $C_N^2$ bases et donc autant de mesures d'attitude.

## Revendications

1. Système électro-optique de détermination de l'attitude d'une partie mobile comprenant des moyens de détermination d'au moins une direction de ladite partie mobile (42), ledit système comprenant une partie fixe ayant un point de référence (O) et une partie mobile (42), la partie fixe étant liée solidairement à un plan image (52), **caractérisé en ce que** la partie mobile (42) est liée solidairement à au-moins un premier dispositif électro-optique linéaire (32) définissant un premier vecteur directeur (33), la partie fixe projetant dans une première zone comprenant le premier dispositif électro-optique (32), au moins deux réseaux de faisceaux, dont l'intersection avec un plan perpendiculaire à l'axe moyen de projection défini au moins deux réseaux de droites non parallèles, chacun des réseaux de droites comprenant au moins trois segments parallèles, les faisceaux interceptant le dispositif électro-optiques (32) en au-moins deux couples de triplets de points, le système comprenant des moyens de calculs d'un premier calcul comprenant la détermination de la position d'un premier point (E) correspondant à la projection dans le plan image (52) d'un point appartenant à une droite (59) comprenant le premier dispositif électro-optique linéaire lorsque celui-ci est considéré positivement à l'infini sur la droite (59) comprenant le premier dispositif électro-optique linéaire (32) à partir des positions des six projections dans le plan image des deux couples de triplets de points, et à partir d'une loi de conservation de birapports de quadruplets de points comprenant un couple de triplets de points et le premier point (E) lors d'une projection centrale, la droite comprenant le point de référence (O) et le premier point (E) déterminant une première direction, ladite première direction représentant la direction de la droite (59) comprenant le premier dispositif électro-optique linéaire (32).

2. Système électro-optique de détermination de l'attitude d'une partie mobile comprenant des moyens de détermination d'au moins une direction de ladite partie mobile selon la revendication 1, **caractérisé en ce que** la projection comprend une mire comprenant d'une part un

○ des vecteurs $\overrightarrow{OE}$ et $\overrightarrow{OF}$ ;
○ d'un quatrième et cinquième vecteurs normés $\vec{e}$ et $\vec{f}$ colinéaires respectivement à $\overrightarrow{OE}$ et $\overrightarrow{OF}$ ;
○ d'un sixième vecteur normé $\vec{u}$, produit vectoriel du quatrième et cinquième vecteurs ;
- une troisième étape de détermination de la rotation r par le produit d'une première matrice formée des premier, second et troisième vecteurs et de l'inverse d'une seconde matrice formée les quatrième, cinquième et sixième vecteurs, l'expression analytique de la rotation étant : $r = [\overrightarrow{e;f;u}] \cdot [\vec{e}_0; \vec{f}_0; \vec{u}_0]^{-1}$.

3. Système électro-optique de détermination de l'attitude d'une partie mobile comprenant des moyens de détermination d'au moins une direction de ladite partie mobile selon la revendication 1, **caractérisé en ce que** le système projette successivement deux de mires comprenant respectivement un premier et un second réseau de faisceaux ayant les mêmes caractéristiques dont l'orientation du second réseau de faisceaux par rapport au premier réseau de faisceaux forme un angle déterminé, les réseaux de faisceaux ayant une largeur (D) suffisante pour couvrir la zone de débattement du capteur et comprenant un nombre déterminé de segments parallèles, dont les birapports de quatre segments consécutifs sont tous différents.

4. Système électro-optique de détermination de l'attitude d'une partie mobile comprenant des moyens de détermination d'au moins une direction de ladite partie mobile selon l'une des revendications 2 à 3, **caractérisé en ce que** le dispositif électro-optique linéaire (32) étant orienté par un premier couple de points $(A_0, B_0)$ situés sur le dispositif électro-optique, un second calcul des positions des projetés (A, B) du premier couple de points $(A_0, B_0)$ sur le plan image (52), déterminent le sens dudit dispositif électro-optique (32) dans l'espace par comparaison de l'ordre d'alignement du premier couple de points projetés (A, B) et du premier point (E) dans le plan image (52).

5. Système électro-optique de détermination de l'attitude d'une partie mobile comprenant des moyens de détermination d'au moins une direction de ladite partie mobile selon l'une des revendications 2 à 3, **caractérisée en ce qu'**un second dispositif électro-optique (40) est lié solidairement à la partie mobile (42), ledit second dispositif (40) définissant un second vecteur directeur (41), non colinéaire au premier vecteur directeur (33), la position du second dispositif (40) par rapport au premier dispositif (33) étant connue dans un référentiel (31) lié à la partie mobile (42), un troisième calcul de la position d'un second point (F) issu de la projection dans le plan image (52) du point de fuite de la droite comprenant le second vecteur directeur (41), la droite comprenant le point de référence (O) et le second point (F) déterminant une seconde direction, ladite seconde direction représentant la direction de la droite comprenant le second dispositif électro-optique linéaire (40).

6. Système électro-optique de détermination de l'attitude d'une partie mobile comprenant des moyens de détermination d'au moins une direction de ladite partie mobile selon la revendication 5, **caractérisé en ce que** le second dispositif électro-optique linéaire (40) étant orienté par un second couple de points $(K_0, L_0)$ situés sur le second dispositif électro-optique linéaire, un quatrième calcul des positions des projetés (K, L) sur le plan image du second couple de points situés sur le second dispositif électro-optique linéaire $(A_0, B_0)$ déterminent le sens dudit second dispositif électro-optique linéaire (40) dans l'espace par comparaison de l'ordre d'alignement du second couple de points projetés (K, L) et du second point (F) dans le plan image.

7. Système électro-optique de détermination de l'attitude d'une partie mobile selon l'une quelconque des revendications 1 à 5, **caractérisé en ce que** le premier calcul et/ou le troisième calcul comprend la détermination :

   ■ d'un point M(X, Y) appartenant à la droite comprenant un dispositif électro-optique linéaire ;
   ■ d'un premier quadruplet de points définis par le projeté du point M et d'un premier triplet de points ;
   ■ d'un second quadruplet de points définis le projeté du point M et d'un second triplet de points ;
   ■ des positions relatives des points des deux triplets de points sur un dispositif électro-optique ;
   ■ de la position du projeté dans le plan image (52) du point M à partir de la loi de conservation d'un birapport d'un quadruplet de points lors d'une projection centrale ;
   ■ de la position d'un point de fuite (E, F), correspondant au projeté du point M lorsque celui-ci est considéré positivement à l'infini sur la droite comprenant le second dispositif électro-optique.

8. Système électro-optique de détermination de l'attitude d'une partie mobile selon la revendication 7, **caractérisée en ce que** la partie mobile subit un mouvement se décomposant en une rotation et une translation dans l'espace repérées par rapport à une position de référence, la rotation de la partie mobile dans l'espace étant déterminée par les moyens de calculs d'un cinquième calcul comprenant

- une première étape de détermination :

 ∘ d'un premier vecteur directeur normé $\vec{e_0}$ colinéaire au vecteur formé par le premier couple de points ($A_0$, $B_0$), correspondant à une position de référence connue du premier dispositif électro-optique ;

 ∘ d'un second vecteur directeur normé $\vec{f_0}$ colinéaire au vecteur formé par le second couple de points ($K_0$, $L_0$) correspondant à une position de référence connue du second dispositif électro-optique ;

 ∘ d'un troisième vecteur normé $\vec{u_0}$, produit vectoriel du premier et second vecteur ;

- une seconde étape de calcul :

 ∘ des positions des points de fuite E et F respectivement des droites comprenant le vecteur image ($\overrightarrow{A'B'}$) par la rotation r du premier vecteur directeur ($\overrightarrow{A_0B_0}$) et le vecteur image ($\overrightarrow{K'L'}$) par la rotation r du second vecteur ($\overrightarrow{K_0L_0}$) ; linéaire, la partie fixe est un projecteur d'images vidéo et l'objet mobile (42) est un casque de pilote.

9. Système électro-optique de détermination de l'attitude d'une partie mobile selon la revendication 8, **caractérisée en ce que** la translation t est déterminée par la relation :

$\vec{t} = k\overrightarrow{OA} - r(\overrightarrow{OA_0})$, où O est le point de référence de la partie fixe, A le projeté dans le plan image d'un point connu du premier dispositif électro-optique, noté $A_0$, et $k$ s'exprime de la manière suivante :

$$k = (\mu - 1)\frac{A_0B_0}{OE}$$, ou E est l'image du point de fuite dans le plan image et $B_0$ et un second point connu du second dispositif électro-optique linéaire, $\mu$ est un réel connu s'exprimant de la manière suivante :

$$\overrightarrow{AE} = \mu\overrightarrow{AB}.$$

10. Système électro-optique de détermination de l'attitude d'une partie mobile comprenant des moyens de détermination d'au moins une direction de ladite partie mobile selon l'une des revendications 3 à 4, **caractérisé en ce que** la comparaison de deux directions d'un capteur calculées successivement détermine une composante du mouvement de l'objet mobile dans l'espace.

11. Système électro-optique de détermination de l'attitude d'une partie mobile comprenant des moyens de détermination d'au moins une direction de ladite partie mobile selon l'une des revendications 3 à 8, **caractérisée en ce que** le dispositif électro-optique est un capteur premier réseau de faisceaux de trois premiers segments lumineux parallèles entre eux, interceptant le capteur en trois points ($A_1$, $B_1$, $C_1$) et d'autre part un second réseau de faisceaux de trois segments lumineux parallèles entre eux, interceptant le capteur en trois autres points ($A_2$, $B_2$, $C_2$), les deux réseaux de faisceaux faisant un angle entre eux de telle manière que la forme des deux réseaux de faisceaux représente une ligne brisée formant au moins trois dents de scie.

12. Casque de pilote selon la revendication 11, caractérisé en qu'il comporte au moins deux dispositifs électro-optiques linéaires non colinéaires.

**Patentansprüche**

1. Elektro-optisches System zur Bestimmung der Haltung eines mobilen Teils, das Mittel zur Bestimmung mindestens einer Richtung des mobilen Teils (42) umfasst, wobei das System einen starren Teil mit einem Bezugspunkt (O) und einen mobilen Teil (42) umfasst, wobei der starre Teil mit einer Bildebene (52) fest verbunden ist, **dadurch gekennzeichnet, dass** der mobile Teil (42) mit mindestens einer ersten linearen elektro-optischen Vorrichtung (32) fest verbunden ist, die einen ersten Richtungsvektor (33) definiert, wobei der starre Teil in eine erste Zone projiziert, die die erste elektro-optische Vorrichtung (32) umfasst, mindestens zwei Strahlennetze, deren Schnittpunkt mit einer zur mittleren Projektionsachse senkrechten Ebene mindestens zwei Netze nicht paralleler Geraden definiert, wobei jedes der Netze von Geraden mindestens drei parallele Segmente umfasst, wobei die Strahlen die elektro-optische Vorrichtung (32) in mindestens zwei Paaren von Dreiergruppen von Punkten abschirmen, wobei das System Berechnungsmittel einer ersten Berechnung umfasst, die die Bestimmung der Position eines ersten Punkts (E) umfasst, der der Projektion in der Bildebene (52) eines Punkts entspricht, der zu einer Geraden (59) gehört, die die erste lineare elektro-optische Vorrichtung umfasst, wenn dieser auf der Geraden (59) in Unendlich als positiv betrachtet wird, die die erste lineare elektro-optische Vorrichtung (32) umfasst, ausgehend von den Positionen der sechs Projektionen in der Bildebene der zwei Paare von Dreiergruppen von Punkten, und ausgehend von einem Gesetz des Erhaltungssatzes von Doppelverhältnissen von Vierergruppen von Punkten, die ein Paar von Dreiergruppen von Punkten umfassen und den ersten Punkt (E) bei einer zentralen Projektion, wobei die Gerade den Bezugspunkt (O) und den ersten Punkt (E) umfasst, die eine erste Richtung bestimmen, wobei die erste Richtung die Richtung der Geraden (59) darstellt, die die erste lineare elektro-optische Vorrichtung (32) umfasst.

2. Elektro-optisches System zur Bestimmung der Haltung eines mobilen Teils, das Mittel zur Bestimmung mindestens einer Richtung des mobilen Teils umfasst, nach Anspruch 1, **dadurch gekennzeichnet, dass** die Projektion ein Testbild umfasst, das einerseits ein ersten Strahlennetz aus drei ersten, zueinander parallelen Leuchtsegmenten umfasst, die den Sensor in drei Punkten ($A_1$, $B_1$, $C_1$) abschirmen, und andererseits ein zweites Strahlennetz aus drei zueinander parallelen Leuchtsegmenten, die den Sensor in drei anderen Punkten ($A_1$, $B_2$, $C_2$) abschirmen, wobei die zwei Strahlennetze untereinander einen Winkel bilden, der derart ist, dass die Form der beiden Strahlennetze eine durchbrochene Linie darstellt, die mindestens drei Sägezähne bildet.

3. Elektro-optisches System zur Bestimmung der Haltung eines mobilen Teils, das Mittel zur Bestimmung mindestens einer Richtung des mobilen Teils umfasst, nach Anspruch 1, **dadurch gekennzeichnet, dass** das System sukzessiv zwei Testbilder projiziert, die jeweils ein erstes und ein zweites Strahlennetz umfassen, die dieselben Merkmale haben, wobei die Richtung des zweiten Strahlennetz im Verhältnis zum ersten Strahlennetz einen bestimmten Winkel bildet, wobei die Strahlennetze eine Breite (D) haben, die ausreichend ist, um die Erfassungszone des Sensors abzudecken und eine bestimmte Anzahl paralleler Segmente umfassen, deren Doppelverhältnisse von vier aufeinanderfolgenden Segmenten alle unterschiedlich sind.

4. Elektro-optisches System zur Bestimmung der Haltung eines mobilen Teils, das Mittel zur Bestimmung mindestens einer Richtung des mobilen Teils umfasst, nach einem der Ansprüche 2 bis 3, **dadurch gekennzeichnet, dass** die lineare elektro-optische Vorrichtung von einem ersten Paar von Punkten ($A_0$, $B_0$) ausgerichtet ist, die sich auf der elektro-optischen Vorrichtung befinden, wobei eine zweite Berechnung der Positionen der Projizierten (A, B) des ersten Paars von Punkten ($A_0$, $B_0$) auf die Bildebene (52) die Richtung der elektro-optischen Vorrichtung (32) im Raum durch Vergleich der Anordnungsordnung des ersten Paars von projizierten Punkten (A, B) und des ersten Punkts (E) in der Bildebene (52) bestimmt.

5. Elektro-optisches System zur Bestimmung der Haltung eines mobilen Teils, das Mittel zur Bestimmung mindestens einer Richtung des mobilen Teils umfasst, nach einem der Ansprüche 2 bis 3, **dadurch gekennzeichnet, dass** eine zweite elektro-optische Vorrichtung (40) fest mit dem mobilen Teil (42) verbunden ist, wobei die zweite Vorrichtung (40) einen zweiten, zum ersten Richtungsvektor (33) nicht kolinearen Richtungsvektor (41) definiert, wobei die Position der zweiten Vorrichtung (40) im Verhältnis zur ersten Vorrichtung (33) in einem mit dem mobilen Teil (42) verbundenen Bezugssystem (31) bekannt ist, wobei eine dritte Berechnung der Position eines zweiten Punkts (F), hervorgegangen aus der Projektion in die Bildebene (52) des Fluchtpunkts der Geraden den zweiten Richtungsvektor (41) umfasst, wobei die Gerade den Bezugspunkt (O) umfasst und der zweite Punkt (F) eine zweite Richtung bestimmt, wobei die zweite Richtung die Richtung der Geraden darstellt, die die zweite lineare elektro-optische Vorrichtung (40) umfasst.

6. Elektro-optisches System zur Bestimmung der Haltung eines mobilen Teils, das Mittel zur Bestimmung mindestens einer Richtung des mobilen Teils umfasst, nach Anspruch 5, **dadurch gekennzeichnet, dass** die zweite lineare elektro-optische Vorrichtung (40) von einem zweiten Paar von Punkten ($K_0$, $L_0$) ausgerichtet ist, die sich auf der zweiten linearen elektro-optischen Vorrichtung befinden, wobei eine vierte Berechnung der Positionen der Projizierten (K, L) auf die Bildebene des zweiten Paars von Punkten, die sich auf der zweiten linearen elektro-optischen Vorrichtung ($A_0$, $B_0$) befinden, die Richtung der zweiten linearen elektro-optische Vorrichtung (40) im Raum durch Vergleich der Anordnungsordnung des zweiten Paars von projizierten Punkten (K, L) und des zweiten Punkts (F) in der Bildebene bestimmt.

7. Elektro-optisches System zur Bestimmung der Haltung eines mobilen Teils nach einem der Ansprüche 1 bis 5, **dadurch gekennzeichnet, dass** die erste Berechnung und/oder die dritte Berechnung die Bestimmung umfasst:

- eines Punkts M(X, Y), der zu der Geraden gehört, die eine lineare elektro-optische Vorrichtung umfasst,
- einer ersten Vierergruppe von Punkten, die durch die Projizierte des Punkts M und eine erste Dreiergruppe von Punkten definiert sind,

- einer zweiten Vierergruppe von Punkten, die durch die Projizierte des Punkts M und eine zweite Dreiergruppe von Punkten definiert sind,
- der relativen Positionen der Punkte der zwei Dreiergruppen von Punkten auf einer elektro-optischen Vorrichtung,
- der Position der Projizierten in der Bildebene (52) des Punkts M, ausgehend vom Gesetz des Erhaltungssatzes eines Doppelverhältnisses einer Vierergruppe von Punkten bei einer zentralen Projektion,
- der Position eines Fluchtpunkts (E, F), der der Projizierten des Punkts M entspricht, wenn dieser auf der Geraden, die die zweite elektro-optische Vorrichtung umfasst, in Unendlich als positiv betrachtet wird.

8.  Elektro-optisches System zur Bestimmung der Haltung eines mobilen Teils nach Anspruch 7, **dadurch gekennzeichnet, dass** der mobile Teil einer Bewegung ausgesetzt ist, die sich aus einer Rotation und einer Verschiebung im Raum zusammensetzt, die im Verhältnis zu einer Bezugsposition ermittelt werden, wobei die Rotation des mobilen Teils im Raum von den Berechnungsmitteln einer fünften Berechnung bestimmt werden, die umfasst:

- einen ersten Bestimmungsschritt:

  ○ eines ersten genormten Richtungsvektors $\vec{e_0}$, der kolinear zu dem Vektor ist, der vom ersten Paar von Punkten $(A_0, B_0)$ gebildet wird, die einer bekannten Bezugsposition der ersten elektro-optischen Vorrichtung entsprechen,
  ○ eines zweiten genormten Richtungsvektors $\vec{f_0}$, der kolinear zu dem Vektor ist, der vom zweiten Paar von Punkten $(K_0, L_0)$ gebildet wird, die einer bekannten Bezugsposition der zweiten elektro-optischen Vorrichtung entsprechen,
  ○ eines dritten genormten Vektors $\vec{u_0}$, der das Vektorprodukt des ersten und zweiten Vektors ist,

- einen zweiten Berechnungsschritt:

  ○ der Positionen der Fluchtpunkte E und F jeweils der Geraden, die den Bildvektor $(\overrightarrow{A'B'})$ durch Rotation r des ersten Richtungsvektors $(\overrightarrow{A_0B_0})$ und den Bildvektor $(\overrightarrow{K'L'})$ durch Rotation r des zweiten Vektors $(\overrightarrow{K_0L_0})$ umfassen,
  ○ der Vektoren $\overrightarrow{OE}$ und $\overrightarrow{OF}$,
  ○ eines vierten und fünften genormten Vektors e und $\vec{f}$, die jeweils zu $\overrightarrow{OE}$ und $\overrightarrow{OF}$ kolinear sind,
  ○ eines sechsten genormten Vektors $\vec{u}$ als Vektorprodukt des vierten und fünften Vektors,

- einen dritten Bestimmungsschritt der Rotation r durch das Produkt einer ersten Matrix, die von dem ersten, zweiten und dritten Vektor gebildet ist und von dem Kehrwert einer zweiten Matrix, die vom vierten, fünften und sechsten Vektor gebildet ist, wobei der analytische Ausdruck der Rotation $r = [\overrightarrow{e;f;u}] \cdot [\overrightarrow{e_0;f_0;u_0}]^{-1}$ ist.

9.  Elektro-optisches System zur Bestimmung der Haltung eines mobilen Teils nach Anspruch 8, **dadurch gekennzeichnet, dass** die Verschiebung t bestimmt ist durch die Gleichung:

$\vec{t} = \overrightarrow{kOA} - r(\overrightarrow{OA_0})$, wobei O der Bezugspunkt des starren Teils, A die Projizierte in der Bildebene eines Punkts, der von der ersten elektro-optischen Vorrichtung bekannt ist, bezeichnet als $A_0$, ist und $k$ folgendermaßen ausgedrückt ist:

$$k = (\mu - 1)\frac{A_0 B_0}{OE}$$ , wobei E das Bild des Fluchtpunts in der Bildebene und $B_0$ und ein zweiter bekannter Punkt der zweiten linearen elektro-optischen Vorrichtung ist, wobei $\mu$ eine bekannte reelle Zahl ist, die sich folgendermaßen ausdrückt: $\overrightarrow{AE} = \mu\overrightarrow{AB}$

10. Elektro-optisches System zur Bestimmung der Haltung eines mobilen Teils, das Mittel zur Bestimmung mindestens einer Richtung des mobilen Teils umfasst, nach einem der Ansprüche 3 bis 4, **dadurch gekennzeichnet, dass** der Vergleich von zwei nacheinander berechneten Richtungen eines Sensors eine Komponente der Bewegung des mobilen Objekts im Raum bestimmt.

11. Elektro-optisches System zur Bestimmung der Haltung eines mobilen Teils, das Mittel zur Bestimmung mindestens einer Richtung des mobilen Teils umfasst, nach einem der Ansprüche 3 bis 8, **dadurch gekennzeichnet, dass** die elektro-optische Vorrichtung ein linearer Sensor ist, wobei der starre Teil ein Videobildprojektor ist und das mobile Objekt (42) ein Pilotenhelm ist.

**12.** Pilotenhelm nach Anspruch 11, **dadurch gekennzeichnet, dass** er mindestens zwei lineare, nicht kolineare elektro-optische Vorrichtungen aufweist.

**Claims**

**1.** An electro-optical system for determining the attitude of a mobile part comprising means for determining at least one direction of said mobile part (42), said system comprising a fixed part having a reference point (O) and a mobile part (42), the fixed part being linked rigidly to an image plane (52), **characterised in that** the mobile part (42) is linked rigidly to at least one first linear electro-optical device (32) defining a first direction vector (33), the fixed part projecting into a first zone comprising the first electro-optical device (32), at least two networks of beams, the intersection of which with a plane perpendicular to the mean axis of the projection defines at least two networks of non-parallel straight lines, each of the networks of straight lines comprising at least three parallel segments, the beams intercepting the electro-optical device (32) in at least two pairs of triples of points, the system comprising means for calculating a first calculation comprising the determination of the position of a first point (E) corresponding to the projection into the image plane (52) of a point belonging to a straight line (59) comprising the first linear electro-optical device when the latter is considered positively at infinity on the straight line (59) comprising the first linear electro-optical device (32) from the positions of the six projections into the image plane of the two pairs of triples of points and on the basis of a law of conservation of cross ratios of quadruples of points comprising a pair of triples of points and the first point (E) under a central projection, the straight line comprising the reference point (O), and the first point (E) determining a first direction, said first direction representing the direction of the straight line (59) comprising the first linear electro-optical device (32).

**2.** The electro-optical system for determining the attitude of a mobile part comprising means for determining at least one direction of said mobile part according to Claim 1, **characterised in that** the projection comprises a test grid comprising on the one hand a first network of beams of three first mutually parallel luminous segments, intercepting the sensor at three points ($A_1$, $B_1$, $C_1$), and on the other hand a second network of beams of three mutually parallel luminous segments, intercepting the sensor at three other points ($A_2$, $B_2$, $C_2$), the two networks of beams making an angle between themselves such that the form of the two networks of beams represents a broken line forming at least three saw teeth.

**3.** The electro-optical system for determining the attitude of a mobile part comprising means for determining at least one direction of said mobile part according to Claim 1, **characterised in that** the system successively projects two test grids comprising respectively a first and a second network of beams having the same characteristics, for which the orientation of the second network of beams with respect to the first network of beams forms a determined angle, the networks of beams having a sufficient width (D) to cover the zone of displacement of the sensor and comprising a determined number of parallel segments, for which the cross ratios of four consecutive segments are all different.

**4.** The electro-optical system for determining the attitude of a mobile part comprising means for determining at least one direction of said mobile part according to either of Claims 2 to 3, **characterised in that** the linear electro-optical device (32) being oriented by a first pair of points ($A_0$, $B_0$) situated on the electro-optical device, a second calculation of the positions of the mappings (A, B) of the first pair of points ($A_0$, $B_0$) on the image plane (52), determine the direction of said electro-optical device (32) in space by comparison of the order of alignment of the first pair of projected points (A, B) and of the first point (E) in the image plane (52).

**5.** The electro-optical system for determining the attitude of a mobile part comprising means for determining at least one direction of said mobile part according to either of Claims 2 to 3, **characterised in that** a second electro-optical device (40) is linked rigidly to the mobile part (42), said second device (40) defining a second direction vector (41), not collinear with the first direction vector (33), the position of the second device (40) with respect to the first device (33) being known in a benchmark frame (31) linked to the mobile part (42), a third calculation of the position of a second point (F) arising from the projection in the image plane (52) of the vanishing point of the straight line comprising the second direction vector (41), the straight line comprising the reference point (O) and the second point (F) determining a second direction, said second direction representing the direction of the straight line comprising the second linear electro-optical device (40).

6. The electro-optical system for determining the attitude of a mobile part comprising means for determining at least one direction of said mobile part according to Claim 5, **characterised in that** the second linear electro-optical device (40) being oriented by a second pair of points ($K_0$, $L_0$) situated on the second linear electro-optical device, a fourth calculation of the positions of the mappings (K, L) on the image plane of the second pair of points situated on the second linear electro-optical device ($A_0$, $B_0$) determine the direction of said second linear electro-optical device (40) in space by comparison of the order of alignment of the second pair of projected points (K, L) and of the second point (F) in the image plane.

7. The electro-optical system for determining the attitude of a mobile part according to any of Claims 1 to 5, **characterised in that** the first calculation and/or the third calculation comprises the determination:

- of a point M(X, Y) belonging to the straight line comprising a linear electro-optical device;
- of a first quadruple of points defined by the mapping of the point M and of a first triple of points;
- of a second quadruple of points defined by the mapping of the point M and of a second triple of points;
- of the relative positions of the points of the two triples of points on an electro-optical device;
- of the position of the mapping in the image plane (52) of the point M on the basis of the law of conservation of a cross ratio of a quadruple of points under a central projection;
- of the position of a vanishing point (E, F) corresponding to the mapping of the point M when the latter is considered positively at infinity on the straight line comprising the second electro-optical device.

8. The electro-optical system for determining the attitude of a mobile part according to Claim 7, **characterised in that** the mobile part undergoes a motion which decomposes into a rotation and a translation in space which are charted with respect to a reference position, the rotation of the mobile part in space being determined by the means for calculating a fifth calculation comprising

- a first step of determining:

  ◦ a first normed direction vector $\vec{e_0}$ collinear with the vector formed by the first pair of points ($A_0$, $B_0$), corresponding to a known reference position of the first electro-optical device;
  ◦ a second normed direction vector $\vec{f_0}$ collinear with the vector formed by the second pair of points ($K_0$, $L_0$) corresponding to a known reference position of the second electro-optical device;
  ◦ a third normed vector $\vec{u_0}$, the vector product of the first and second vector;

- a second step of calculating:

  ◦ the positions of the vanishing points E and F respectively of the straight lines comprising the image vector ($\overrightarrow{A'B'}$) by the rotation r of the first direction vector () $\overrightarrow{A_0B_0}$ and the image vector ($\overrightarrow{K'L'}$) by the rotation r of the second vector ($\overrightarrow{K_0L_0}$);
  ◦ the vectors $\overrightarrow{OE}$ and $\overrightarrow{OF}$ ;
  ◦ fourth and fifth normed vectors e and $\vec{f}$ collinear respectively with $\overrightarrow{OE}$ and $\overrightarrow{OF}$ ;
  ◦ a sixth normed vector $\vec{u}$, the vector product of the fourth and fifth vectors;

- a third step of determining the rotation r by the product of a first matrix formed of the first, second and third vectors and of the inverse of a second matrix formed of the fourth, fifth and sixth vectors, the analytical expression of the rotation being:

$$r = [\overrightarrow{e;f;u}] \cdot [\vec{e_0};\vec{f_0};\vec{u_0}]^{-1}.$$

9. The electro-optical system for determining the attitude of a mobile part according to Claim 8, **characterised in that** the translation t is determined through the relation:

$\vec{t} = k\overrightarrow{OA} - r(\overrightarrow{OA_0})$, where O is the reference point of the fixed part, A the mapping in the image plane of a known point of the first electro-optical device, denoted $A_0$, and $k$ is expressed in the following manner:

$$k = (\mu - 1)\frac{A_0 B_0}{OE}$$ where E is the image of the vanishing point in the image plane and $B_0$ and a second known point of the second linear electro-optical device, and $\mu$ is a known real expressed in the following manner:

$$\overrightarrow{AE} = \mu\overrightarrow{AB}.$$

10. The electro-optical system for determining the attitude of a mobile part comprising means for determining at least one direction of said mobile part according to either of Claims 3 to 4, **characterised in that** the comparison of two successively calculated directions of a sensor determines a component of the motion of the mobile object in space.

11. The electro-optical system for determining the attitude of a mobile part comprising means for determining at least one direction of said mobile part according to any of Claims 3 to 8, **characterised in that** the electro-optical device is a linear sensor, the fixed part is a video image projector and the mobile object (42) is a pilot helmet.

12. A pilot helmet according to Claim 11, **characterised in that** it comprises at least two non-collinear linear electro-optical devices.

FIG.1

FIG.2

FIG. 3

FIG. 4

FIG. 5

FIG. 6

**EP 2 169 420 B1**